# EUROPEAN PATENT APPLICATION

(11) **EP 4 560 505 A1**
(43) Date of publication of application: **28.05.2025**
(21) Application number: 23307019.2
(22) Date of filing: 21.11.2023
(51) Int. Cl.: G06F 21/45, G06F 21/46, G06F 21/60, H04L 9/40, H04L 9/32

(54) **METHOD FOR STORING SECRETS INTO A DATABASE OVER A TELECOMMUNICATION NETWORK USING SECURING FUNCTIONS**

(71) Applicant: Orange, 92130 Issy-les-Moulineaux (FR)
(72) Inventor: GABER, Chrystel, 92326 CHATILLON CEDEX (FR); DAVID, Simona, 020334 BUCAREST (FR)
(74) Representative: Regimbeau

(57) **Abstract**

Method for storing a provided secret (m1) into a database (DB) deployed on a server (5) connected to a telecommunication network (N), said method comprising steps performed by said server (5) of:
- identifying (S1) at least one security function among a set of security functions available at a security service (SS), said security functions being adapted to increase a complexity criterion of any secret;
- applying (S2) said at least one security function to said provided secret;
- storing (m4) said provided secret (m1) into said database (DB).

## Description

### FIELD OF THE INVENTION

The invention relates to the storage of secrets, in particular personal secrets like identifiers and passwords, into a database deployed in a server connected to a telecommunication network. In particular, it concerns a way to secure such storage in order to avoid or limit to risk of hacking of the stored secrets.

### BACKGROUND OF THE INVENTION

Many types of secrets need to be stored in databases deployed on servers, which can be accessed by remote services.

Such secrets encompass identifiers (like usernames or "login") and passwords or, more generally, passphrases. These secrets are stored so as to allow users to access to a service by identifying themselves by providing at each connection the same secrets that the ones they provided at registration time.

Secrets have important values for the users since they guarantee access to services provided over telecommunication networks, in particular: banking services, commercial services, public administration services, etc.

This high value attracts hackers or cybercriminals, who aim in stealing these secrets in order to access the services by impersonating the authentic user.

Various technical means can be used for avoiding or at least limiting the theft of secrets, in particular their storage within a database.

The secrets are not stored in plain text. Usually, instead, the secrets are hashed and only the hash values are stored. As the hash function is not reversible, even if the stored value is stolen by a cybercriminal, the latter cannot access to the original secret.

The authentic user willing to access the service will enter its secret(s) and the server performs the same hashing function on it/them and compare the resulting values to the ones stored in the database. According to the results of this comparison (hashed value to hashed value), access to the service is granted or not.

However, such an arrangement may not be sufficient. By stealing a hashed value in the database, the cybercriminal may determine the original secret under certain circumstances and at some computation cost.

In particular, secrets may be not strong enough, and may belong to a list of "potential secrets" that the cybercriminal may build. The hashing function being known or guessable, he may generate hashed values for these potential secrets and then it would be sufficient to compare the stolen hashed value with the generated hashed values to potentially determine a corresponding secret.

The more secrets the cybercriminal can steal, the higher would be the probability to get a matching secret. So, when a whole database is leaked, the probability is high that the cybercriminal can determine at least one secret and get an access to the protected service.

An additional technique for avoiding or limiting cyberattacks is consists in adding "salt" before applying the hashing function.

In cryptography, a salt is random data fed as an additional input to a one-way function that hashes data, here the secret. Salting helps defend against attacks that use precomputed tables (e.g. rainbow tables), by vastly growing the size of table needed for a successful attack. It also helps protect secrets that occur multiple times in a database (like weak classical passwords), as a new salt is used for each password instance.

Still, there exists strong need to improve the situation by proposing new schemes for protecting the secrets stored in a database.

In particular, it is required to protect the content of the database in situation where the "salt" itself would be compromised.

### SUMMARY OF THE DISCLOSURE

An object of the present invention aims in alleviating at least partly the above-mentioned drawbacks.

This object is achieved with a method for storing a provided secret into a database deployed on a server connected to a telecommunication network, said method comprising steps performed by said server of:
- identifying at least one security function among a set of security functions available at a security service, said security functions being adapted to increase a complexity criterion of any secret;
- applying said at least one security function to said provided secret;
- storing said provided secret into said database.

By applying a security function that is dynamically determined among a set of available ones, the cybercriminal would have no technical means anymore to retrieve the original secrets from the stollen data, since the treatment applied to the secrets is unknown and undeterminable to him/her.

The proposed method allows a more efficient security to the secret stored in the database.

Preferred embodiments comprise one or more of the following features, which can be taken separately or together, either in partial combination or in full combination.
- a hash function is applied before applying said at least one security function.
- a hash function is applied after applying said at least one security function.
- said at least one security function is identified according to a time schedule.
- at least one new security function is applied to secrets already stored inside said database when a security criterion is met.
- said set of security functions comprises byte-to-byte swapping functions, Feistel cypher functions, functions based on arithmetic operation modulo 65537...
- said identifying comprises indicating parameters for said at least one security function.

Another aspect of the invention relates to a server comprising a database and a frontend for receiving secret transmitted over a telecommunication network, comprising at least a processor adapted for:
- identifying at least one security function among a set of security functions available at a security service, said security functions being adapted to increase a complexity criterion of any secret;
- applying said at least one security function to said provided secret;
- storing said provided secret into said database.

Another aspect of the invention relates to a computer program comprising code instructions for executing a method as previously described.

Further features and advantages of the invention will appear from the following description of embodiments of the invention, given as non-limiting examples, with reference to the accompanying drawings listed hereunder.

### BRIEF DESCRIPTION OF THE DRAWINGS

Fig. 1 illustrates a context of possible deployment of the method according to embodiments of the invention.
Fig. 2 illustrates a chronogram of the method for storing a provided secret, according to embodiments of the invention.
Fig. 3 illustrates a step of applying at least one security function to a secret, according to embodiments of the invention.
Fig. 4 illustrates a chronogram of a method for authenticating a client accessing to a server, according to embodiments of the invention.

### DETAILED DESCRIPTION OF EMBODIMENTS

The proposed method aims in providing security to secrets stored in a database deployed over a server that is connected to a telecommunication network so that it could be target of cyberattacks.

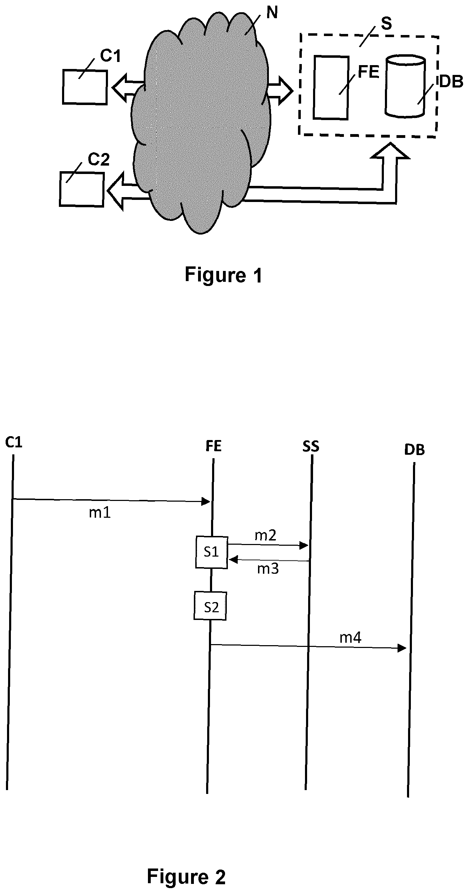

Figure 1 illustrates a schematic example of context within which the proposed method could be embodied.

A server S comprises a database DB and a frontend FE. The server S is connected to a telecommunication network N, making it accessible to clients C1, C2.

The term "server" shall here be understood in its more general technical meaning encompassing a standalone server machine, or abstracted server like a server deployed over a farm of machines or a virtualized server over a network cloud.

The term "network" shall also be understood with a broad meaning. It could in particular be a set of networks, comprising for instance access networks, backbone networks, etc. Access networks may be wireline networks (fiber, ADSL...), or wireless networks (Wi-Fi, 3G/4G/5G cellular networks...).

Clients may be any apparatus comprising means to connect to a distant server over telecommunication networks. They may be desktop or laptop computers, mobiles phones, smartphones, digital tablets, connected TV sets, etc.

The client C1 can interact with the server S through the telecommunication network S.

The database DB is adapted to be deployed on a server S and to store secrets. Secrets encompasses personal data like personal identifier (aka usernames) and passwords (or more generally pass phrases). Other types of secrets may be considered as well.

The secrets may be stored according to various means and methods. They may be provisioned by a mass update or one-by-one through various interfaces.

In the embodiment illustrated by Fig. 2, a client C1 may interact with the frontend FE of the server S for storing secrets into the database DB.

This embodiment corresponds to a usual case where a user register to a service and set up, in an initial step, his/her own secrets, usually a couple username/password.

However, in other situations, like for instance for a banking service, part of all the secrets associated with a user are determined by a back office of the service provider. The user receives the secrets by alternate way, usually not over the telecommunication network but rather by post letters or similar ways.

In the embodiment depicted on figure 2, the client C1 interacts with the frontend FE and provides a secret by a message m1. This message m1 may be an HTTP message transmitted when prompted by an HTML page to provide a secret (username, password...).

The secret is received by the frontend FE of the server S.

In a step S1, the server S identifies one or several security functions among a set of available security functions provided by a security service SS.

The security functions are data-manipulation functions adapted to increase a complexity criterion of secrets.

The complexity criterion may be representative of the strength of the secret, which may be considered as a measurement of the effectiveness of the secret against guessing or brute-force attacks. In its usual form, it estimates how many trials an attacker who does not have direct access to the password would need, on average, to guess it correctly. The strength of a password is a function of length, complexity, and unpredictability.

Strength may be specified by the amount of information entropy, which is measured in shannon (Sh) and is a concept from information theory. It can be regarded as the minimum number of bits necessary to hold the information in a secret of a given type. The complexity criterion may thus be based on the entropy of the secrets.

Further information may be found on the related Wikipedia page:
https://en.wikipedia.org/wiki/Password_strength

Various regulations set high requirements for setting secrets like passwords or passphrases. However, the users tend to adopt easy-to-remind secrets instead, and/or keep a same secret among various services. This results in service provides to implement solutions to address the weak secrets set (in general) by users.

The security functions are thus adapted to increase the complexity of the secrets before storing them in the database DB. Then, the stored secrets have high complexity and may be considered as "strong secrets" according to usual practice in cyber-criminality.

In particular, the security functions may be adapted to increase the entropy of the secrets.

In addition, a set of security functions are provided by a security service, SS, among which a subset (potentially only one) security function is selected.

As this selection may be controlled by the server S itself, and as it may be differently performed at each call, a cybercriminal would be puzzled when trying to understand the treatment performed on the secret: event if it can steal various secrets, it would be impossible to determine the applied treatment and, *a fortiori,* the original secret (before treatment).

In other words, not only would each security function render the task much harder for the cybercriminal, but the fact that its choice is dynamically done among a set (potentially a large set) of possible treatment, makes if even harder for him/her.

The security service SS may be a service provided by a software entity that can be deployed on the server itself, or, remotely, on another server functionally connected with the server S.

The server S may send a message m2 to the security service SS, which can be a message internal to the server S.

This message identifies a particular subset (1 or several) of security function among a set of available security functions provided by the security service SS.

In some embodiments, the security service SS exposes the set of available security functions, and the server S then identifies the one(s) it wishes. The request m2 comprises then an identifier of the selected security function(s).

The request m2 may also indicate parameters for the security function.

The security functions that can be available at the security service SS may belong to various types.

Each type, or family, of security functions may comprise several similar functions, in order to provide more diversity and to complexify further the reverse engineering of cybercriminals. For instance, several implementations of same function may be provided in diverse computer languages.

A family of security function may be described as a set of mathematical functions with similar complexity and structure. The families may comprise:
- Bit logical manipulation function, like a XOR (exclusive OR logical function)
- byte-to-byte or bit-to-bit swapping functions,
- Feistel cypher functions (which may be complexified by SHA-1 type algorithm),
- functions based on arithmetic operation modulo 65537...

The skilled person would understand that this list is only example and that various types of security functions may be used instead or in addition.

Parameters may allow to configure or change the behavior of the security function. For example, a parameter may specific which bits or bytes shall be swapped in a bit-to-bit or byte-to-by swapping function.

According to the embodiment depicted by Figure 2, the security service SS provides to the server, by a message m3, the selected security function(s).

The security function(s) may be provided:
- as software code of the function(s),
- as a dataset allowing the server S to construct the security function(s)
- as identifier(s) pointing to the selected security function(s),
- etc.

At step S2, the server S can apply the identified security function(s) to the secret received from the client C1. In other words, the data-manipulation treatments implemented by the chosen security function(s) are applied to the secret. The data representing the secret are then transformed to more secured data, associated with a higher security criterion.

These data, representing the secret provided by the client C1, can then be stored into the database DB, by message m4. The format of message m4 depends on the technologies associated with the database DB, and is clearly accessible to the skilled person knowledgeable of website and database designs.

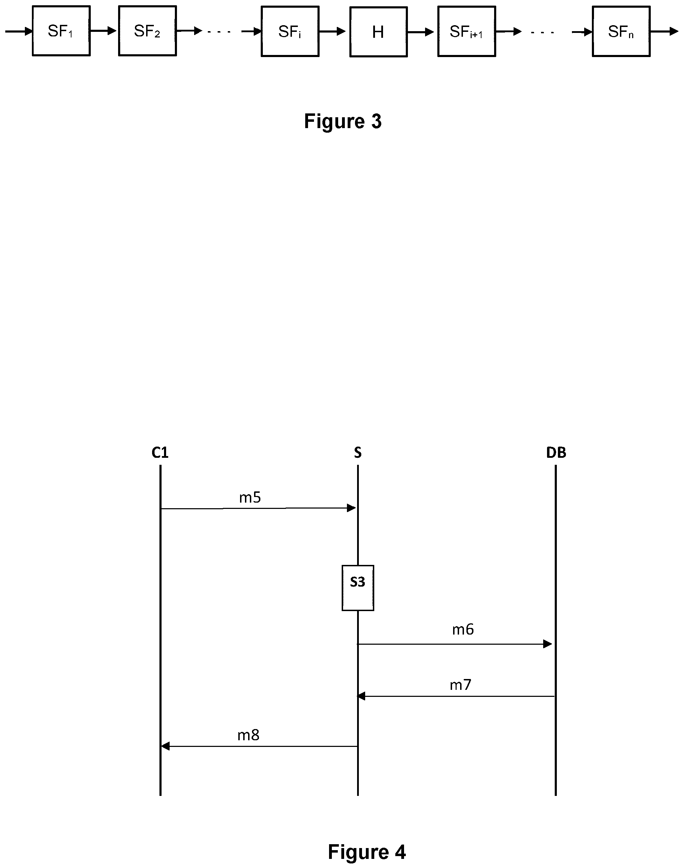

The Figure 3 illustrates this step of applying at least one security function to a secret according to embodiments of the invention.

As depicted, several security functions SF₁, SF₂, SFᵢ, SFᵢ₊₁... SFₙ may be applied to a same secret. The result of a security function could be fed as input to the subsequent security function of the chain.

Typically, a hash function H can also be applied to the secret before its storage in the database DB, as previously explained.

A salt may be added to the hashing mechanism. In cryptography, a salt is random data fed as an additional input to a one-way function that hashes the secrets. Salting helps defend against attacks that use precomputed tables (e.g. rainbow tables), by vastly growing the size of table needed for a successful attack. It also helps protect secrets (notably passwords) that occur multiple times in a database, as a new salt is used for each password instance.

Further information on salt can be found in the literature on cryptography, and for instance the dedicated Wikipedia page:
https: //en.wikipedia.org/wiki/Salt_(cryptography)

According to embodiments, this hash function H can be applied to the secret before or after the security function(s) or both as depicted in figure 3.

In the depicted embodiments, security functions SF₁, SF₂... SFᵢ are applied before the hash function H. According to other embodiments only one or zero security function may be applied instead.

In the depicted embodiments, security functions SFᵢ₊₁,... SFₙ are applied after the hash function H. According to other embodiments only one or zero security function may be applied instead.

The security function(s) applied to secrets may be determined secret by secret, or for a bunch of secrets, or for a period of time, or kept constant a same service and database DB. Various embodiments are possible on this matter.

According to some embodiments, the security functions may be changed, at least partly, at certain time milestones, for instance on a periodic basis. For instance, at these milestones, a new security function is added to the current sequence of security functions, SF₁...SFₙ applied to the secret.

According to other embodiments, the security function may be changed according to a number of secrets. For instance, every N secrets, the applied sequence is changed (for example, as previously, by adding a new security function to the current sequence).

Other embodiments are of course possible in order to limit the use of a same sequence of security functions. Doing so limits the attack surface for cybercriminals.

According to embodiments, at least one new security function is applied to secrets already stored inside the database DB when a security criterion is met.

The security criterion may be the detection of a theft inside the database, or a suspicion of theft (above a give threshold, for instance).

Once a security criterion is met, security function(s) are applied to the content of the database in order to secure again its content. Then, the stolen values are not usable anymore, since they won't match anymore the content of the database.

The Figure 4 illustrates a chronogram of a method for authenticating a client accessing to a server S, according to embodiments of the invention.

In order to access the service associated with the secret, the client provides, by message m5, a secret to the server S.

Then, at step S3, the server S applied the current security function(s) to the provided secret.

Then it compares the provided secret with secrets previously stored in the database and looks for a matching value. This may be performed by a query m6 to the database DB and a response m7 containing the matching value or an error message with no matching is found.

The server S may then send a message m8 to the client C1 indicating whether the access is granted or not, and/or trigger any other appropriate actions.

It shall be stress that the security functions applied to the provided secret shall be the same as the security functions that have previously been applied to the secret stored into the database, so that matching values could be possible for identical secrets.

Client C2 willing to attack the database DB, through FE or by bypassing it, will face database content secured by at least one secured function. Even for weak secret set by user, the use of appropriate secured function(s) can render the database content secured enough.

In addition, as previously described, some particular embodiments may reduce the impact of any breakthrough of the cybercriminal C2 by changing the used security functions over time or over the set of secrets. So, even though the database content is compromised, the change of the sequence of security function makes it not possible to use the stolen data anymore and/or for other secrets.

The invention has been described with reference to preferred embodiments. However, many variations are possible within the scope of the invention.

## Claims

1. Method for storing a provided secret (m1) into a database (DB) deployed on a server (S) connected to a telecommunication network (N), said method comprising steps performed by said server (S) of:
- identifying (S1) at least one security function among a set of security functions available at a security service (SS), said security functions being adapted to increase a complexity criterion of any secret;
- applying (S2) said at least one security function to said provided secret;
- storing (m4) said provided secret (m1) into said database (DB).

2. Method according to the previous claim, wherein a hash function is applied before applying said at least one security function.

3. Method according to any of the previous claims, wherein a hash function is applied after applying said at least one security function.

4. Method according to any of the previous claims, wherein said at least one security function is identified according to a time schedule.

5. Method according to any of the previous claims, wherein at least one new security function is applied to secrets already stored inside said database when a security criterion is met.

6. Method according to any of the previous claims, wherein said set of security functions comprises byte-to-byte swapping functions, Feistel cypher functions, functions based on arithmetic operation modulo 65537...

7. Method according to any of the previous claims, wherein said identifying comprises indicating parameters for said at least one security function.

8. Method for authenticating a client accessing to a server, wherein the client provides a secret to the server, and wherein the server compares said secret with secrets stored in a database according to the method according to any of the previous claims.

9. Server (S) comprising a database (DB) and a frontend (FE) for receiving secret transmitted over a telecommunication network (N), comprising at least a processor adapted for:
- identifying (S1) at least one security function among a set of security functions available at a security service (SS), said security functions being adapted to increase a complexity criterion of any secret;
- applying (S2) said at least one security function to said provided secret;
- storing (m4) said provided secret (m1) into said database (DB).

10. Computer program comprising code instructions for executing a method according to any one of claims 1 to 8.
